# EUROPÄISCHE PATENTSCHRIFT

(11) **EP 0 457 040 B1**
(45) Veröffentlichungstag und Bekanntmachung des Hinweises auf die Patenterteilung: **15.06.1994**
(21) Anmeldenummer: 91106004.4
(22) Anmeldetag: 16.04.1991
(51) Int. Cl.: B60S 1/56, B60R 16/02

(54) **Schaltungsanordnung für einen Kraftfahrzeugscheinwerfer**
Circuit arrangement for a motor vehicle headlight
Dispositif de circuit pour un projecteur de véhicule automobile

(30) Priorität: 14.05.1990 DE 4015399
(43) Veröffentlichungstag der Anmeldung: 21.11.1991
(73) Patentinhaber: Hella KG Hueck & Co., 59552 Lippstadt (DE)
(72) Erfinder: Lange, Ulrich Volker, W-4782 Erwitte (DE); Daub, Wolfgang, W-4780 Lippstadt 11 (DE); Wendt, Friedrich-Karl, W-4796 Salzkotten-Verlar (DE)

(56) Entgegenhaltungen:
- DE-C- 2 714 781
- US-A- 4 084 126

## Beschreibung

Die Erfindung betrifft eine Schaltungsanordnung für einen Kraftfahrzeugscheinwerfer mit einem Reflektor und/oder einer Linse, mit einer Lichtquelle, die mit einer Spannungsversorgungseinrichtung verbunden ist, mit einer Abschlußscheibe, die mindestens ein elektrisch leitendes Heizelement auf oder in der Abschlußscheibe aufweist, und mit einer Einschalteinrichtung für das Heizelement.

Aus der deutschen Auslegeschrift DE-A-27 14 781 ist eine Schaltungsanordnung für Kraftfahrzeugscheinwerfer dieser Art bekannt. Der Kraftfahrzeugscheinwerfer weist dabei einen Reflektor und eine Lichtquelle auf, die mit einer Spannungsversorgungseinrichtung verbunden ist. Die Abschlußscheibe des Kraftfahrzeugscheinwerfer weist mindestens ein elektrisch leitendes Heizelement auf oder in der Abschlußscheibe auf, das mit einer Einschalteinrichtung verbunden ist.

Bei einem Scheinwerfer dessen Lichtquelle nicht ständig eingeschaltet ist, neigt die Abschlußscheibe bei bestimmten Temperaturbedingungen zum Beschlagen oder zur Eisbildung. Die elektrische Heizeinrichtung, die hier in Abhängigkeit von verschiedenen Einschaltbedingungen eingeschaltet wird, weist jedoch den Nachteil auf, daß bei einem sicherheitsgefährdenden Bruch der Abschlußscheibe ein solcher Bruch nicht erkannt wird.

Der Erfindung liegt die Aufgabe zugrunde, eine Schaltungsanordnung für einen Kraftfahrzeugscheinwerfer zu schaffen, bei der neben der Vermeidung einer Beschlag- und Eisbildung auf einfache und kostengünstige Weise eine zuverlässige, sicherheitserhöhende Bruchüberwachung der Abschlußscheibe erreicht wird.

Die Aufgabe wird erfindungsgemäß dadurch gelöst, daß das Heizelement elektrisch leitend mit einer Auswerteeinrichtung verbunden ist und daß die Auswerteeinrichtung eine Abschlußscheibenbruchüberwachungseinrichtung aufweist, die als eine Strommeßeinrichtung oder eine Spannungsmeßeinrichtung ausgebildet ist.

Es ist von Vorteil, daß das Heizelement elektrisch leitend mit einer Auswerteeinrichtung verbunden ist und daß die Auswerteeinrichtung eine Abschlußscheibenbruchüberwachungseinrichtung aufweist, die als eine Strommeßeinrichtung oder eine Spannungsmeßeinrichtung ausgebildet ist, weil somit auf besonders einfache und kostengünstige Weise neben der Vermeidung einer Beschlag- und Eisbildung eine Bruchüberwachung der Abschlußscheibe gewährleistet wird, die mit hoher Zuverlässigkeit arbeitet und die Sicherheit bei dem Betrieb des Kraftfahrzeugs erhöht.

Als besonders vorteilhaft erweist es sich, daß die Lichtquelle eine Hochdruckgasentladungslampe ist, und daß die Spannungsversorgungseinrichtung ein Teil des Vorschaltgeräts der Hochdruckgasentladungslampe ist, weil somit zum einen sichergestellt wird, daß bei der Verwendung von Hochdruckgasentladungslampen in Kraftfahrzeugscheinwerfern, die einen hohen Wirkungsgrad aufweisen und damit eine so geringe Verlustleistung haben, die auch bei längerem Betrieb nicht ausreicht, um bei bestimmten Temperaturbedingungen die Abschlußscheibe des Kraftfahrzeugscheinwerfers beschlagfrei oder eisfrei zu halten, daß eine Beschlag- und Eisbildung sicher vermieden wird und zum anderen die Sicherheit bei dem Betrieb des Kraftfahrzeugs erheblich erhöht wird, da bei einem Bruch der Abschlußscheibe Teile in dem Kraftfahrzeugscheinwerfer berührbar werden, die eine lebensgefährliche Hochspannung aufweisen. Bei der Detektion eines Bruchs der Abschlußscheibe wird dabei das Vorschaltgerät der Hochdruckgasentladungslampe stromlos geschaltet.

Dadurch, daß die Einschalteinrichtung und die Auswerteeinrichtung Bestandteile des Vorschaltgeräts der Hochdruckgasentladungslampe sind, ergibt sich der Vorteil, daß die Schaltungsanordnung besonders einfach und kostengünstig ist.

Es ist von Vorteil, daß die Einschalteinrichtung eine Schalteinrichtung aufweist, die das Heizelement getaktet ansteuert, weil somit auf besonders einfache und kostengünstige Weise eine Steuerung oder eine Regelung des dem Heizelement zugeführten Stroms ermöglicht wird.

Dadurch, daß die Spannungsversorgungseinrichtung der Vorwandler des Vorschaltgeräts der Hochdruckgasentladungslampe ist, ergibt sich der Vorteil einer besonders einfachen und kostengünstigen Ausführungsform der Schaltungsanordnung.

Es ist von Vorteil, daß der Vorwandler eine Spannungserhöhungsschaltung aufweist, die die Versorgungsspannung des Heizelements bei Inbetriebnahme der Hochdruckgasentladungslampe und für eine Zeit nach Inbetriebnahme erhöht, ergibt sich der Vorteil, daß bei Inbetriebnahme der Hochdruckgasentladungslampe ein vorliegender Beschlag oder Eis auf der Abschlußscheibe möglichst schnell und ohne großen Schaltungsaufwand entfernt wird.

Dadurch, daß die Einschalteinrichtung mit einer Temperaturmeßeinrichtung verbunden ist, ergibt sich der Vorteil, daß das Heizelement energiesparend nur dann bestromt wird, wenn Temperaturverhältnisse vorliegen, bei dem eine Beschlag- oder Eisbildung möglich ist.

Dadurch, daß das Heizelement als mindestens eine Heizwendel oder eine Heizspirale ausgebildet ist, ergibt sich eine besonders einfache und kostengünstige Ausgestaltung und Anordnung des Heizelements.

Die gleichen Vorteile ergeben sich, wenn das Heizelement als eine leitfähige, lichtdurchlässige Schicht auf der Abschlußscheibe ausgebildet ist.

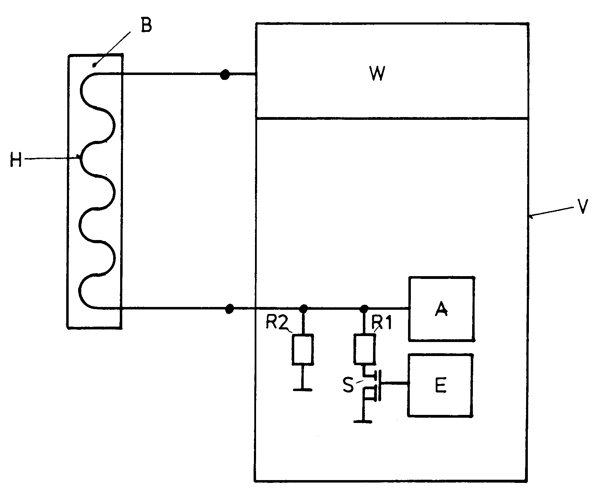

Ein Ausführungsbeispiel der Erfindung ist in der einzigen Zeichnung dargestellt und wird im folgenden anhand dieser Zeichnung näher beschrieben.

Die einzige Zeichnung zeigt eine Schaltungsanordnung für einen Kraftfahrzeugscheinwerfer, bei der der Kraftfahrzeugscheinwerfer, der hier nicht gezeigt ist, eine Abschlußscheibe (B) aufweist, die mit mindestens einem elektrisch leitenden Heizelement (H) ausgestattet ist, daß in oder auf der Abschlußscheibe (B) angeordnet ist. Die Anschlußdrähte des Heizelements, das hier beispielhaft als mindestens eine Heizwendel ausgebildet ist, sind elektrisch mit einer Spannungsversorgungseinrichtung verbunden, die hier beispielhaft, das Vorschaltgerät (V) einer nicht gezeigten Hochdruckgasentladungslampe des Kraftfahrzeugscheinwerfers ist. Der eine Anschlußdraht des Heizelements (H) ist dabei elektrisch leitend mit dem Vorwandler (W) des Vorschaltgeräts (V) verbunden, während der andere Anschlußdraht des Heizelements (H) elektrisch leitend zum einen mit einer Auswerteeinrichtung (A) und zum anderen mit einer Einschalteinrichtung (E) verbunden ist. Bei einem anderen Ausführungsbeispiel können die Einschalteinrichtung (E) und die Auswerteeinrichtung (A) in einer Einrichtung zusammengefaßt sein. Zudem können die Auswerteeinrichtung (A) und die Einschalteinrichtung (E) getrennt von dem Vorschaltgerät (V) der Hochdruckgasentladungslampe angeordnet sein.

In der Verbindung zwischen der Einschalteinrichtung (E) und dem Heizelement (H) ist hier beispielhaft eine Schalteinrichtung (S) angeordnet. Die Schalteinrichtung (S) ist hier beispielhaft als ein Transistor ausgebildet, dessen Schaltstrecke angesteuert durch die Einschalteinrichtung (E) das Heizelement (H) mit Masse verbinden kann. Die Schaltstrecke der Schalteinrichtung (S) ist hier über einen ersten Widerstand (R1) zum einen mit der Auswerteeinrichtung (A) und zum anderen mit dem Heizelement (H) verbunden.

Der erste Widerstand (R1) ist der Meßwiderstand, an dem eine Spannung abfällt, wenn die Schalteinrichtung (S) geschlossen ist. Ist das Heizelement (H) gebrochen, so sorgt der zweite Widerstand (R2), der die Masse zum einen mit dem Heizelement (H) und zum anderen mit der Auswerteeinrichtung (A) verbindet, dafür, daß die Spannung auf einen definierten Wert heruntergezogen wird. Der Eingang der Auswerteeinrichtung (A) ist hochohmig ausgelegt.

Die Auswerteeinrichtung (A) überwacht auch dann das Heizelement (H), wenn die Schalteinrichtung (S) geöffnet ist, da dann die Spannung an dem Eingang der Auswerteeinrichtung (A) gleich der Versorgungsspannung von dem Vorschaltgerät (V) ist.

Für eine besonders energiesparende Ausführungsform der Schaltungsanordnung kann die Einschalteinrichtung (E) mit einer Temperaturmeßeinrichtung verbunden sein, damit das Heizelement (H) nur dann bestromt wird, wenn Temperaturen vorliegen, bei denen eine Beschlag- oder Eisbildung möglich ist. Die Abschlußscheibe (B), die auch als eine Streuscheibe ausgebildet sein kann, um das Licht von der Lichtquelle in vorgegebene Bereiche zu streuen, kann mit einem Heizelement (H) versehen sein, das als eine leitfähige, lichtdurchlässige Schicht ausgebildet ist, die auf der Abschlußscheibe (B) aufgebracht ist.

Es erweist sich als besonders vorteilhaft, wenn bei Inbetriebnahme der Hochdruckgasentladungslampe und während einer Zeit nach Inbetriebnahme der Hochdruckgasentladungslampe, wie hier beispielhaft von dem Vorwandler (W) des Vorschaltgeräts (V) dem Heizelement (H) eine erhöhte Spannung zugeführt wird, wodurch ein Beschlag oder Eis auf der Abschlußscheibe besondes schnell entfernt wird, was die Sicherheit bei dem Betrieb des Kraftfahrzeugs erhöht.

Dadurch, daß die Auswerteeinrichtung (A) zudem eine Bruchüberwachungseinrichtung für die Abschlußscheibe (B) aufweist, ergibt sich bei der Verwendung von Hochdruckgasentladungslampen in Kraftfahrzeugen der besondere Vorteil, daß die Sicherheit bei dem Betrieb des Kraftfahrzeugs erheblich erhöht wird, da bei einem Bruch der Abschlußscheibe (B) hochspannungsführende Teile des Kraftfahrzeugscheinwerfers berührbar werden, was zu lebensgefährlichen Verletzungen führen kann. In dem Fall des Bruchs der Abschlußscheibe (B) wird dabei bei einer sicheren Detektion eines Bruchs das Vorschaltgerät (V) der Hochdruckgasentladungslampe stromlos geschaltet.

## Patentansprüche

1. Schaltungsanordnung für einen Kraftfahrzeugscheinwerfer mit einem Reflektor und/oder einer Linse, mit einer Lichtquelle, die mit einer Spannungsversorgungseinrichtung verbunden ist, mit einer Abschlußscheibe, die mindestens ein elektrisch leitendes Heizelement auf oder in der Abschlußscheibe aufweist, und mit einer Einschalteinrichtung für das Heizelement, dadurch gekennzeichnet, daß das Heizelement (H) elektrisch leitend mit einer Auswerteeinrichtung (A) verbunden ist, und daß die Auswerteeinrichtung (A) eine Abschlußscheibenbruchüberwachungseinrichtung aufweist, die als eine Strommeßeinrichtung oder eine Spannungsmeßeinrichtung ausgebildet ist.

2. Schaltungsanordnung nach Anspruch 1, dadurch gekennzeichnet, daß die Lichtquelle eine Hochdruckgasentladungslampe ist, und daß die Spannungsversorgungseinrichtung das Vorschaltgerät (V) der Hochdruckgasentladungslampe ist.

3. Schaltungsanordnung nach Anspruch 2, dadurch gekennzeichnet, daß die Einschalteinrichtung (E) und die Auswerteeinrichtung (A) Bestandteile des Vorschaltgerätes (V) der Hochdruckgasentladungslampe sind.

4. Schaltungsanordnung nach Anspruch 3, dadurch gekennzeichnet, daß die Einschalteinrichtung (E) eine Schalteinrichtung (S) aufweist, die das Heizelement (H) getaktet ansteuert.

5. Schaltungsanordnung nach Anspruch 4, dadurch gekennzeichnet, daß die Spannungsversorgungseinrichtung der Vorwandler (W) des Vorschaltgerät (V) der Hochdruckgasentladungslampe ist.

6. Schaltungsanordnung nach Anspruch 5, dadurch gekennzeichnet, daß der Vorwandler (W) eine Spannungserhöhungsschaltung aufweist, die die Versorgungsspannung des Heizelements (H) bei Inbetriebnahme der Hochdruckgasentladungslampe und für eine Zeit nach Inbetriebnahme erhöht.

7. Schaltungsanordnung nach einem der vorstehenden Ansprüche, dadurch gekennzeichnet, daß die Einschalteinrichtung (E) mit einer Temperaturmeßeinrichtung verbunden ist.

8. Schaltungsanordnung nach einem der vorstehenden Ansprüche, dadurch gekennzeichnet, daß das Heizelement (H) als mindestens eine Heizwendel oder eine Heizspirale ausgebildet ist.

9. Schaltungsanordnung nach einem der vorstehenden Ansprüche, dadurch gekennzeichnet, daß das Heizelement (H) als eine leitfähige, lichtdurchlässige Schicht auf der Abschlußscheibe (B) ausgebildet ist.

10. Schaltungsanordnung nach einem der vorstehenden Ansprüche, dadurch gekennzeichnet, daß die Abschlußscheibe (B) eine Streuscheibe ist.

## Claims

1. Circuit arrangement for a motor vehicle headlamp comprising a reflector and/or a lens, with a light source which is connected to a voltage supply device, and with an end cover panel which incorporates at least one electrically conductive heating element on or in the end cover panel, and with a turn-on device for the heating element, characterised in that the heating element (H) is electroconductively connected to an evaluator (A), and that the evaluator (A) incorporates an end cover panel fracture monitoring device in the form of a current measuring device or voltage measuring device.

2. Circuit arrangement according to claim 1, characterised in that the light source is a high-pressure electric-discharge lamp, and that the voltage supply device is the ballast (V) of the high-pressure electric-discharge lamp.

3. Circuit arrangement according to claim 2, characterised in that the turn-on device (E) and the evaluator (A) are components of the ballast (V) of the high-pressure electric-discharge lamp.

4. Circuit arrangement according to claim 3, characterised in that the turn-on device (E) incorporates a switching device (S) which controls the heating element (H) in a timed cycle.

5. Circuit arrangement according to claim 4, characterised in that the voltage supply device is the pre-transducer (W) of the ballast (V) of the high-pressure electric-discharge lamp.

6. Circuit arrangement according to claim 5, characterised in that the pre-transducer (W) incorporates a voltage booster circuit which boosts the supply voltage of the heating element (H) when the high-pressure electric-discharge lamp is started up and for a short time thereafter.

7. Circuit arrangement according to any of the preceding claims, characterised in that the turn-on device (E) is connected to a temperature measuring device.

8. Circuit arrangement according to any of the preceding claims, characterised in that the heating element (H) is in the form of at least one heating filament or a heating coil.

9. Circuit arrangement according to any of the preceding claims, characterised in that the heating element (H) is in the form of a conductive, translucent layer on the end cover panel (B).

10. Circuit arrangement according to any of the preceding claims, characterised in that the end cover panel (B) is a diffusing panel.

## Revendications

1. Montage pour un projecteur de véhicule automobile comprenant un réflecteur et/ou une lentille, une source lumineuse raccordée à un dispositif d'alimentation électrique, une glace d'obturation ou de fermeture pourvue d'au moins un élément chauffant électriquement conducteur, qui est disposé sur ou dans la glace, ainsi qu'un dispositif d'enclenchement pour l'élément chauffant, caractérisé en ce que l'élément chauffant (H) est connecté à un dispositif d'évaluation (A) et que ce dispositif d'évaluation (A) comporte un dispositif de surveillance de bris de glace de projecteur réalisé comme un dispositif mesureur de courant ou un dispositif mesureur de tension.

2. Montage selon la revendication 1, caractérisé en ce que la source lumineuse est une lampe à décharge à haute pression et que le dispositif d'alimentation électrique est le ballast (V) de la lampe à décharge.

3. Montage selon la revendication 2, caractérisé en ce que le dispositif d'enclenchement (E) et le dispositif d'évaluation (A) sont des parties constitutives du ballast (V) de la lampe à décharge.

4. Montage selon la revendication 3, caractérise en ce que le dispositif d'enclenchement (E) comporte un dispositif de commutation (S) qui commande l'élément chauffant (H) de façon rythmée.

5. Montage selon la revendication 4, caractérisé en ce que le dispositif d'alimentation électrique est le transformateur d'entrée (W) du ballast (V) de la lampe à décharge.

6. Montage selon la revendication 5, caractérisé en ce que le transformateur d'entrée (W) comporte un circuit élévateur de tension qui augmente la tension d'alimentation de l'élément chauffant (H) à l'allumage de la lampe à décharge et pendant un certain temps après l'allumage.

7. Montage selon une des revendications précédentes, caractérisé en ce que le dispositif d'enclenchement (E) est raccordé à un dispositif mesureur de température.

8. Montage selon une des revendications précédentes, caractérisé en ce que l'élément chauffant (H) est réalisé sous la forme d'au moins une hélice chauffante ou une spirale chauffante.

9. Montage selon une des revendications précédentes, caractérisé en ce que l'élément chauffant (H) est réalisé sous la forme d'une couche conductrice et translucide disposée sur la glace (B).

10. Montage selon une des revendications précédentes, caractérisé en ce que la glace (B) est une glace diffusante.
